(19) **Europäisches Patentamt / European Patent Office / Office européen des brevets**

(11) **EP 1 228 905 B1**

(12) **EUROPEAN PATENT SPECIFICATION**

(45) Date of publication and mention
of the grant of the patent:
**12.09.2007 Bulletin 2007/37**

(51) Int Cl.:
***B60G 17/015*** *(2006.01)*

(21) Application number: **01130787.3**

(22) Date of filing: **22.12.2001**

(54) **Vehicle height adjustment device**

Höhenregelungssystems für ein Fahrzeug

Dispositif de réglage de la hauteur d'un véhicule

(84) Designated Contracting States:
**DE FR GB**

(30) Priority: **05.02.2001 JP 2001028306**

(43) Date of publication of application:
**07.08.2002 Bulletin 2002/32**

(73) Proprietor: **Hino Motors, Ltd.**
**Hino-shi,**
**Tokyo 191-8660 (JP)**

(72) Inventor: **Toyoshima, Kazuo**
**Tokyo 191-8660 (JP)**

(74) Representative: **LOUIS, PÖHLAU, LOHRENTZ**
**Postfach 3055**
**90014 Nürnberg (DE)**

(56) References cited:
WO-A-98/35845          DE-A- 3 223 140
DE-A- 3 810 386        DE-A- 19 801 546
GB-A- 2 317 598        US-A- 3 765 692
US-A- 4 618 156

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a vehicle height adjustment device used for a transportation vehicle with air suspensions for front and rear wheels, respectively.

Conventionally, dominant as a suspension system for transportation vehicles such as trucks for transporting cargoes is a system in which only rear wheels are provided with an air suspension whereas front wheels have a leaf spring suspension. In recent years, however, transportation vehicles having air suspensions for front and rear wheels, respectively, are becoming widespread.

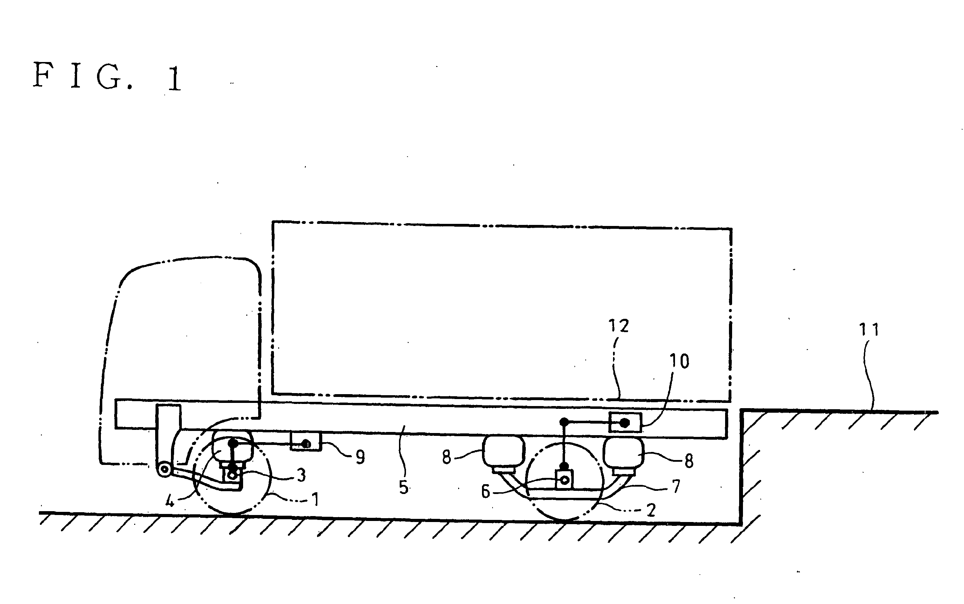

Fig. 1 shows an example of a transportation vehicle having air suspensions for front and rear wheels 1 and 2, respectively, in which a frame 5 (or a vehicle body) is supported by a front axle 3 through air springs 4 and by a rear axle 6 through two sets of paired air springs 8, the paired air springs 8 being interconnected longitudinally of the vehicle through a support beam 7.

The frame 5 is provided with vehicle front and rear height sensors 9 and 10 adjacent to the front and rear air springs 4 and 8, respectively. The front height sensor 9 serves to measure a distance, as a vehicle front height, from an appropriate reference point on the front axle 3 to the frame 5. The vehicle rear height sensor 10 serves to measure a distance, as a vehicle rear height, from an appropriate reference point on the rear axle 6 to the frame 5.

In the transportation vehicle described above having the air suspensions for the front and rear wheels 1 and 2, respectively, pressures inside the front and rear air springs 4 and 8 are adjusted while measuring and checking vehicle front and rear heights by the vehicle front and rear sensors 9 and 10, so that a rear end of a vehicle bed 12 can be aligned in height with a platform 11 when loading and unloading cargoes on to and from the vehicle bed 12 with a rear portion of the vehicle being confronted with the platform 11. Additionally, the vehicle bed 12 may be tilted longitudinally of the vehicle by adjusting the pressures inside the front and rear air springs 4 and 8 so that the vehicle bed 12 is rear-side down for unloading or front-side down for loading, which will facilitate loading and unloading of cargoes in rollaway carriages or baskets.

WO-A-9835845 discloses a vehicle height adjustment device according to the preamble of claim 1.

However, such conventional adjustment system allows wide operational freedom where vehicle front and rear heights are independently adjustable by adjusting the pressures inside the front and rear air springs 4 and 8. Therefore, adjustment of a vehicle height have to be made by repeating manual operation of, for example, raising the rear side of a vehicle after raising the front side, so that it has been troublesome and complicated to simultaneously adjust both a rear end height of and a tilt of the vehicle bed 12 into targeted values.

More specifically, the rear end of the vehicle bed 12 which must be actually aligned in height with the platform 11 is rearward of a support position of the rear air springs 8 so that a measured height by the vehicle rear height sensor 10 differs from an actual height of the rear end of the vehicle bed 12 depending upon the tilt of the bed 12. Therefore, the rear end height of the vehicle bed 12 cannot be maintained to a desired value merely by varying the pressure inside the front air springs 4 with the pressure inside the rear air springs 8 being fixed so as to adjust the tilt of the vehicle bed 12.

For this reason, the rear end of the vehicle bed 12, which may be temporarily aligned in height with the platform 11, tends to be readily disaligned with the latter again upon a next operation of adjusts the tilt of the vehicle bed 12. Consequently, it will take tremendous time until the operations are completed to obtain targeted values of both the rear end height of and the tilt of the vehicle bed 12.

In view of the above, an object of the present invention is to provide a vehicle height adjustment device which enables quick and desired adjustment of a rear end height of and a tilt of a vehicle bed only by simply inputting targeted values.

The invention provides a vehicle height adjustment device used for a transportation vehicle with air suspensions for front and rear wheels, respectively, so as to adjust distances between a front axle and a vehicle body and between a rear axle and the vehicle body by adjustment of pressures inside the air suspensions, characterized in that it comprises a vehicle front height sensor for measuring a vehicle front height defined by the front axle and the vehicle body, a vehicle rear height sensor for measuring a vehicle rear height defined by the rear axle and the vehicle body, a vehicle front height adjustment valve for controlling supply and discharge of working air to and from air springs as the air suspension for the front wheels, a vehicle rear height adjustment valve for controlling supply and discharge of working air to and from air springs as the air suspension for the rear wheels, a controller for outputting control signals to said vehicle front and rear height adjustment valves while checking detection signals from said vehicle front and rear height sensors so that a rear end height of and a tilt of a vehicle bed may be adjusted into targeted values and an input unit for inputting said targeted values to said controller.

Thus, only inputting of the targeted values for the rear end height of and the tilt of the vehicle bed causes the controller to output the control signals to the vehicle front and rear height adjustment valves so as to adjust an actual rear end height of and an actual tilt of the vehicle bed into the targeted values. As a result, supply and discharge of working air to and from the air springs for the front and rear wheels are controlled to adjust the vehicle front and rear heights to proper values so that a rear end height of and a tilt of the vehicle bed are quickly adjusted as desired.

It is preferable that, when the targeted values of the rear end height of and the tilt of the vehicle bed are inputted, the controller calculates values of the vehicle front and rear heights for achieving the targeted values and controls the vehicle front and rear height adjustment valves to adjust the vehicle front and rear heights so as to substantially make coincident the actually measured values by the vehicle front and rear height sensors with the calculated values.

One specific embodiment of the invention will be described with reference to the drawings; in which:

Fig. 1 is a schematic view showing a conventional transportation vehicle;

Fig. 2 is a schematic view showing an embodiment of the invention;

Fig. 3 is a flow chart showing a control procedure of the controller in Fig. 2; and

Fig. 4 is a view for explanation of adjustment of a rear end height of and a tilt of a vehicle bed.

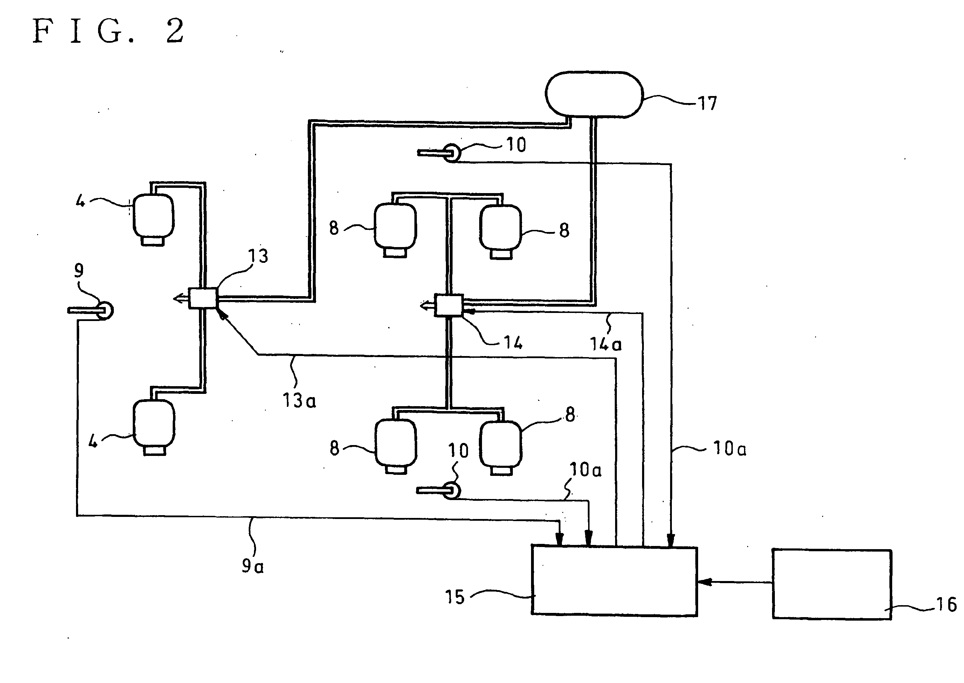

Figs. 2 to 4 show an embodiment of the invention in which parts identical to those in Fig. 1 are given the same reference numerals.

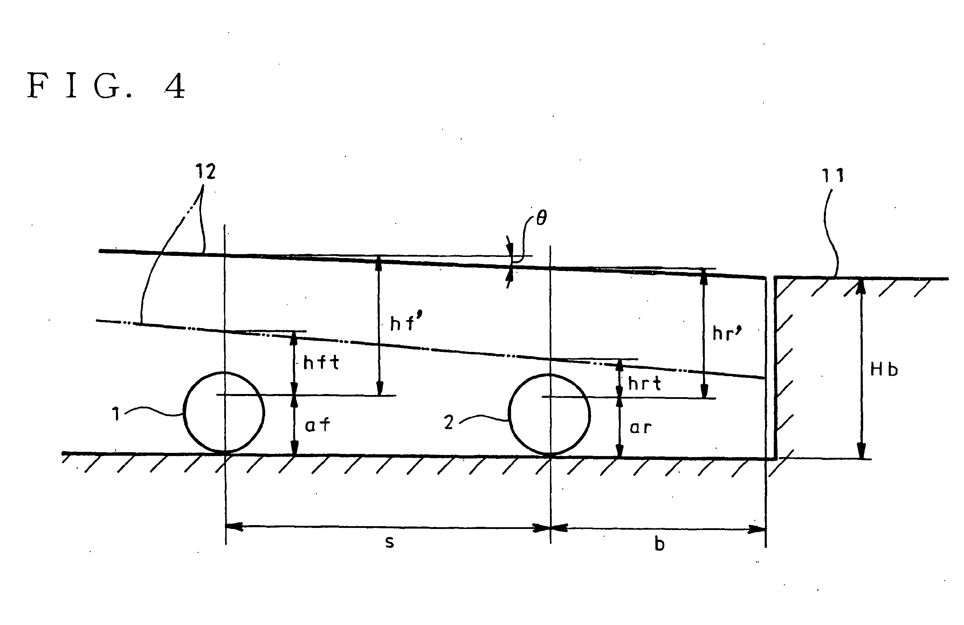

As shown in Fig. 2, a vehicle height adjustment device according to the embodiment is provided with a controller 15 for supply and discharge of working air into which detection signals 9a and 10a from vehicle front and rear height sensors 9 and 10 explained with reference to Fig. 1 are inputted, and from which control signals 13a and 14a are outputted to vehicle front and rear height adjustment valves 13 and 14 in working air systems for front and rear air suspensions, respectively. Further, an input unit 16 is provided to input each of targeted values of a rear end height Hb of and a tilt θ of a vehicle bed 12 (see Fig. 4) to the controller 15.

The vehicle front height adjustment valve 13 is disposed at a position where working air which is led from an air tank 17 mounted on a transportation vehicle is distributed to each of the front air springs 4 and is constituted as a magnetic valve or similar means which switches flow passages. The valve 13 operates such that it selectively connects passages between the air tank 17 and each of the air springs 4 to supply working air to the air springs 4 and selectively opens each of the air springs 4 to the atmosphere to discharge working air from the air springs 4.

Similarly, the vehicle rear height adjustment valve 14 is disposed at a position where working air from the air tank 17 is distributed to each of the rear air springs 8, and is constituted as a magnetic valve or similar means which switches flow passages. The valve 14 operates such that it selectively connects passages between the air tank 17 and each of the rear air springs 8 to supply working air to the air springs 8 and selectively opens each of the air springs 8 to the atmosphere to discharge working air from the air springs 8.

Fig. 2 shows the embodiment having the single vehicle front height sensor 9 and the paired vehicle rear height sensors 10. In this arrangement, with respect to the detection signals 10a from both of the vehicle rear height sensors 10, an average of actually measured values is adopted and used for calculations which will be described below.

The input unit 16 is such that targeted values may be manually inputted with keys, up/down switches or other means; various types of input means may be used.

The controller 15 is such that, when the targeted values of the rear end height of and the tilt of the vehicle bed 12 are inputted from the input unit 16, it calculates values of the vehicle front and rear heights for achieving the targeted values and controls the vehicle front and rear height adjustment valves 13 and 14 to adjust the vehicle front and rear heights so as to substantially make coincident the actually measured values by the vehicle front and rear height sensors 9 and 10 with the calculated values.

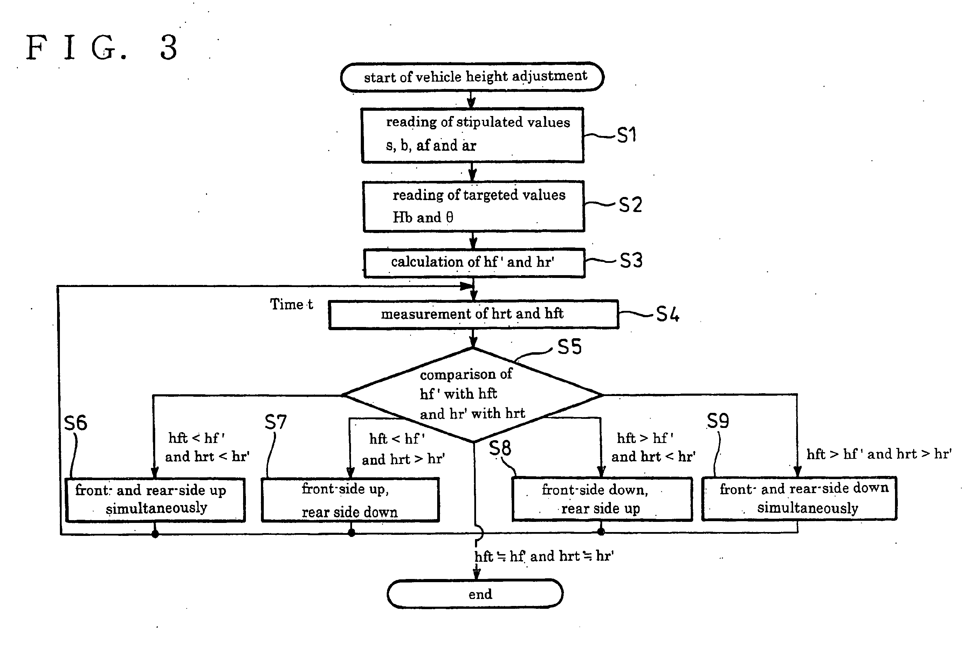

More specifically, as shown in a flow chart for an operation procedure of the controller 15 in Fig. 3, the input unit 16 is actuated to start the vehicle height adjustment; then, in Step 1, stipulated values s, b, af and ar as shown in Fig. 4 are read.

Here, s represents a distance between center positions or measurement reference points of the front and rear wheels 1 and 2; b, a distance between the center position or the measurement reference point of the rear wheels 2 and the rear end of the vehicle bed 12; af, a height from the ground to the measurement reference point for the vehicle front height sensor 9; and ar, a height from the ground to the measurement reference point for the vehicle rear height sensors 10.

Subsequently, in Step S2, read are a targeted value for the rear end height Hb of the vehicle bed 12 or height of the platform 11 and a targeted value (positive in the vehicle bed 12 with front-side down, and negative in the vehicle bed 12 with rear-side down) of a tilt θ of the vehicle bed 12 both of which have been manually inputted in the input unit 16.

Then, in Step S3, calculated are vehicle front and rear heights hf' and hr' for achieving the rear end height Hb of and the tilt θ of the vehicle bed 12 by the following formulae:

$$hf' = Hb - (s + b) \cdot \tan\theta - af$$

and

$$hr' = Hb - b \cdot \tan\theta - ar$$

Further, in Step S4, actually measured values of vehicle front and rear heights hft and hrt of the vehicle bed 12 at a current time (time t from the start) in the position shown with the two-dot chain line in Fig. 4 are read as detection signals 9a and 10a from the vehicle front and rear height sensors 9 and 10, respectively.

And then, in Step S5, the vehicle front and rear heights hf' and hr' calculated in the previous Step S3 are compared with the actually measured vehicle front and rear height hft and hrt read in Step S4, respectively.

If the result of the comparison in Step S5 is

$$\text{hft} < \text{hf' and hrt} < \text{hr',}$$

then the procedure proceeds to Step S6 for "front- and rear-side up simultaneously" where the control signals 13a and 14a are outputted to the vehicle front and rear height adjustment valves 13 and 14, respectively, to supply working air to the air springs 4 and 8. Then, the procedure is returned to Step S4 for repetition.

If the result of the comparison in Step S5 is

$$\text{hft} < \text{hf' and hrt} > \text{hr',}$$

then the procedure proceeds to Step S7 for "front-side up and rear-side down" where the control signals 13a and 14a are outputted to the vehicle front and rear height adjustment valves 13 and 14, respectively, to supply working air to the air spring 4 and to discharge working air from the air springs 8. After that, the procedure is returned to Step S4 for repetition.

If the result of the comparison in Step S5 is

$$\text{hft} > \text{hf' and hrt} < \text{hr',}$$

the procedure proceeds to Step S8 for "front-side down and rear-side up" where the control signals 13a and 14a are outputted to the vehicle front and rear height adjustment valves 13 and 14, respectively, to discharge working air from the air springs 4 and to supply working air to the air springs 8. After that, the procedure is returned to Step S4 for repetition.

If the result of the comparison in Step S5 is

$$\text{hft} > \text{hf' and hrt} > \text{hr',}$$

then the procedure proceeds to Step S9 for "front- and rear-side down simultaneously" where the control signals 13a and 14a are outputted to the vehicle front and rear height adjustment valves 13 and 14 to discharge working air from the air springs 4 and 8. After that, the procedure is returned again to Step S4 for repetition.

If the result of the comparison in Step S5 is finally

$$\text{hft} \doteqdot \text{hf' and hrt} \doteqdot \text{hr',}$$

the vehicle height adjustment is ended. More, the vehicle height adjustment is ended where the following result is obtained:

$$| \text{hft} - \text{hf'} | < \varepsilon\text{f and } | \text{hrt} - \text{hr'}| < \varepsilon\text{r}$$

where εf and εr are predetermined threshold values.

Therefore, when the controller 15 described above is used to operate a vehicle height adjustment device, only by inputting targeted values of the rear end height of and the tilt of the vehicle bed 12, the control signals 13a and 14a are outputted to the vehicle front and rear height adjustment valves 13 and 14 from the controller 15 so as to adjust an actual rear end height of and an actual tilt of the vehicle bed 12 into the targeted values. As a result, supply and discharge of working air to and from the air springs 4 and 8 of the front and rear wheels 1 and 2, respectively, are controlled to adjust the vehicle front and rear heights to proper values. Thus, the rear end height of and the tilt of the vehicle bed 12 are quickly adjusted to desired values.

According to the embodiment described above, the rear end height of and the tilt of the vehicle bed 12 can be quickly adjusted only by simply inputting targeted values. As a result, eliminated is troublesomeness in vehicle height adjustment of the transportation vehicle having the air suspensions for the front and rear wheels 1 and 2. Time required for completing the vehicle height adjustment is drastically shortened in comparison with conventional systems.

**Claims**

1. A vehicle height adjustment device used for a transportation vehicle with air suspensions for front and rear wheels (1, 2), respectively, so as to adjust distances between a front axle (3) and a vehicle body (5) and between a rear axle (6) and the vehicle body (5) by adjustment of pressures inside the air suspensions, so that it comprises a vehicle front height sensor (9) for measuring a vehicle front height defined by the front axle (3) and the vehicle body (5), a vehicle rear height sensor (10) for measuring a vehicle rear height defined by the rear axle (6) and the vehicle body (5), a vehicle front height adjustment valve (13) for controlling supply and discharge of working air to and from air springs (4) as the air suspension for the front wheels (1), a vehicle rear height adjustment valve (14) for controlling supply and discharge of working air to and from air springs (8) as the air suspension for the rear wheels (2), a controller (15) for outputting control signals (13a and 14a) to said vehicle front and rear height adjustment valves 13 and 14) while checking detection signals (9a and 10a) from said vehicle front and rear height sensors (9 and 10) **characterised in that** a rear end height of and a tilt of the vehicle bed may be adjusted into targeted values, and an input unit (16) for inputting said targeted values to said controller (15).

2. A device as claimed in Claim 1, wherein, when the targeted values of the rear end height of and the tilt of the vehicle bed are inputted, the controller (15) calculates values of a vehicle front and rear heights for achieving the targeted values and controls the vehicle front and rear height adjustment valves (13 and 14) to adjust the vehicle front and rear heights so as to substantially make coincident actually measured values by the vehicle front and rear height sensors (9 and 10) with the calculated values.

**Patentansprüche**

1. Fahrzeughöhen-Einstellvorrichtung, die für ein Transportfahrzeug mit Luftfederungen für jeweils die Vorder- und Hinterräder (1, 2) verwendet wird, um so Abstände zwischen einer Vorderachse (3) und einer Fahrzeugkarosserie (5) und zwischen einer Hinterachse (6) und der Fahrzeugkarosserie (5) durch Einstellen von Drücken in den Luftfederungen einzustellen, wobei sie einen vorderen Fahrzeughöhensensor (9) zum Messen einer vorderen Fahrzeughöhe, die durch die Vorderachse (3) und die Fahrzeugkarosserie (5) definiert ist, einen hinteren Fahrzeughöhensensor (10) zum Messen einer hinteren Fahrzeughöhe, die durch die Hinterachse (6) und die Fahrzeugkarosserie (5) definiert ist, ein vorderes Fahrzeughöhen-Einstellventil (13) zum Steuern der Zuführung und der Abführung von Arbeitsluft zu und von Luftfedern (4), die die Luftfederung für die Vorderräder (1) bilden, ein hinteres Fahrzeughöhen-Einstellventil (14) zum Steuern der Zuführung und der Abführung von Arbeitsluft zu und von Luftfedern (8), die die Luftfederung für die Hinterräder (2) bilden, und eine Steuereinheit (15) zum Ausgeben von Steuersignalen (13a und 14a) an das vordere und das hintere Fahrzeughöhen-Einstellventil (13 und 14) während der Prüfung von Erfassungssignalen (9a und 10a) von dem vorderen und dem hinteren Fahrzeughöhensensor (9 und 10) umfasst, **dadurch gekennzeichnet, dass** eine Höhe des hinteren Endes und eine Neigung des Fahrzeugbodens auf Sollwerte eingestellt werden können und eine Eingabeeinheit (16) vorgesehen ist, um die Sollwerte in die Steuereinheit (15) einzugeben.

2. Vorrichtung nach Anspruch 1, bei der die Steuereinheit (15) dann, wenn die Sollwerte der Höhe des hinteren Endes und der Neigung des Fahrzeugbodens eingegeben werden, Werte einer vorderen und einer hinteren Fahrzeughöhe berechnet, um die Sollwerte zu erreichen, und das vordere und das hintere Fahrzeughöhen-Einstellventil (13 und 14) steuert, um die vordere und die hintere Fahrzeughöhe in der Weise einzustellen, dass die durch den vorderen und den hinteren Fahrzeughöhensensor (9, 10) gemessenen Ist-Werte mit den berechneten Werten im Wesentlichen übereinstimmen.

**Revendications**

1. Dispositif de réglage de hauteur de véhicule utilisé pour un véhicule de transport à suspensions pneumatiques pour les roues avant et arrière (1, 2), respectivement, de façon à régler les distances entre un essieu avant (3) et un châssis du véhicule (5) et entre un essieu arrière (6) et le châssis du véhicule (5) par réglage des pressions à l'intérieur des suspensions pneumatiques, qui comprend un capteur de hauteur avant de véhicule (9) pour mesurer une hauteur avant du véhicule définie par l'essieu avant (3) et le châssis du véhicule (5), un capteur de hauteur arrière de véhicule (10) pour mesurer une hauteur arrière du véhicule définie par l'essieu arrière (6) et le châssis du véhicule (5), une vanne de réglage de hauteur avant de véhicule (13) pour commander l'admission et l'échappement d'air de travail vers et à partir de ressorts à air (4) constituant la suspension pneumatique pour les roues avant (1), une vanne de réglage de hauteur arrière de véhicule (14) pour commander l'admission et l'échappement d'air de travail vers et à partir de ressorts à air (8) constituant la suspension pneumatique pour les roues arrière (2), une unité de commande (15) pour fournir des signaux de commande (13a et 14a) aux dites vannes de réglage de hauteur avant et arrière de véhicule (13 et 14) tout en vérifiant des signaux de détection (9a et 10a) venant des dits capteurs de hauteur avant et arrière de véhicule (9 et 10), **caractérisé en ce qu'**une hauteur d'extrémité arrière de la benne du véhicule et une inclinaison de celle-ci peuvent être réglées à des valeurs de consigne, et une unité d'entrée (16) est prévue pour entrer les dites valeurs de consigne à la dite unité de commande (15).

2. Dispositif selon la revendication 1, dans lequel, lorsque les valeurs de consigne de la hauteur d'extrémité arrière et de l'inclinaison de la benne de véhicule sont entrées, l'unité de commande (15) calcule les valeurs des hauteurs avant et arrière du véhicule pour obtenir des valeurs de consigne, et elle commande les vannes de réglage de hauteur avant et arrière du véhicule (13 et 14) pour régler les hauteurs avant et arrière du véhicule de façon à faire sensiblement coïncider les valeurs effectivement mesurées par les capteurs de hauteur avant et arrière du véhicule (9 et 10) avec les valeurs calculées.

# FIG. 1

FIG. 2

EP 1 228 905 B1

# F I G. 3

start of vehicle height adjustment

reading of stipulated values
s, b, af and ar — S1

reading of targeted values
Hb and θ — S2

calculation of hf' and hr' — S3

Time t

measurement of hrt and hft — S4

S5

comparison of
hf' with hft
and hr' with hrt

S6

hft < hf'
and hrt < hr'

S7

hft < hf'
and hrt > hr'

S8

hft > hf'
and hrt < hr'

S9

hft > hf' and hrt > hr'

front- and rear-side up
simultaneously

front-side up,
rear side down

front-side down,
rear side up

front- and rear-side down
simultaneously

hft ≒ hf' and hrt ≒ hr'

end

EP 1 228 905 B1

F I G. 4

EP 1 228 905 B1

**EP 1 228 905 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9835845 A